# EUROPEAN PATENT APPLICATION

(11) **EP 4 275 504 A1**
(43) Date of publication of application: **15.11.2023**
(21) Application number: 22172968.4
(22) Date of filing: 12.05.2022
(51) Int. Cl.: A22C 11/12, E05F 5/10

(54) **CLIPPING MACHINE HAVING PIVOTABLE COVER WITH SUBSECTION DAMPING DEVICE**

(71) Applicant: Poly-clip System GmbH & Co. KG, 65795 Hattersheim (DE)
(72) Inventor: WALDSTÄDT, Manfred, 55124 Mainz (DE)
(74) Representative: Eisenführ Speiser

(57) **Abstract**

The present invention relates to a clipping machine (CM) for producing sausage-shaped products (S) by filling a flowable filling material into a tubular or bag-shaped packaging casing (M) and closing said tubular or bag-shaped packaging casing (TM) by at least one closure means (C), like a closure clip, the clipping machine (CM) comprising a plurality of mechanical and electrical components for producing the sausage-shaped products (S); a housing (H) accommodating the components of the clipping machine (CM), the housing (H) having at least one pivotable protective cover (PC) for covering and uncovering the components of the clipping machine (CM), wherein the protective cover (PC) is pivotably movable between a closed position and an opened position; a first spring device (100) arranged to exert a force on the protective cover (PC) in direction to the opened position of the protective cover (PC); and a subsection damping device (200) arranged to exert an additional force on the protective cover (PC) towards the opened position and to provide a damping effect to the movement of the protective cover (PC), as long as an opening angle (α) of the protective cover (PC) is smaller than a threshold angle (α1).

## Description

The present invention relates generally to a clipping machine for producing sausage-shaped products, like sausages, by filling a flowable filling material into a tubular or bag-shaped packaging casing and closing said packaging casing by a closure means, like a closure clip, and further to a clipping machine comprising or being combined with a hanging line arranged downstream of the clipping machine. The present invention in particular relates to such a clipping machine having a pivotable cover with a subsection damping device.

In practice, production machines or packaging machines, like clipping machines, are known, for producing sausage-shaped products, like sausages, in which filling material is fed into a tubular or bag-shaped packaging casing which is stored on a filling tube, and which is closed at its front end by at least one closure means, like a closure clip, i.e. the end of the packaging casing pointing in the feeding direction of the filling material. After a predetermined portion of filling material has been fed into the tubular or bag-shaped packaging casing, the filled tubular or bag-shaped packaging casing is gathered by gathering means, a plait-like portion being at least substantially free from filling material is formed thereto, and at least one first closure clip is placed and closed on said plait-like portion by a clipping device, for closing the portion of the tubular or bag-shaped packaging casing just filled. Additionally, at least one second closure clip may be placed for closing the front end of the sausage-shaped product to be produced next. For severing the sausage-shaped product just produced from the remaining supply of a tubular or bag-shaped packaging casing, a cutting device may be provided for cutting off the casing material between the first and second closure clip. The sausage-shaped product just produced may then be discharged from the clipping machine by a discharge device, like a belt conveyor or a hanging line, for further treatment, like cooking or smoking. For example, in a hanging line, the sausage-shaped products discharged from the clipping machine are stored on a rod-like element, such as a smoking rod, wherein a suspension element, such as a suspension loop, may be provided and attached to one end of each of sausage-shaped products and the suspension loops are threaded onto the smoking rods.

Components of these known clipping machines may be driven pneumatically, whereas other components are driven electrically. As central components, a clipping machine may include a main drive device, e.g. in the form of an electric motor, for commonly driving almost all components of the clipping machine, and/or several single drive devices for separately and independently driving all components. Furthermore, a clipping machine usually includes a control unit for controlling the clipping machine, particularly, by controlling the drives of the components and evaluating inputs from sensor devices.

For safety reasons, the moving mechanical components and the electrical components of the machine must be covered, so that a user cannot touch these components during operation, to avoid any risk of injury by components moving with high forces or high speeds or by an electric shock in a possibly wet or humid operating environment. On the other hand, a reliable, hygienic and save operation of the clipping machine with the optionally attached hanging line requires regular cleaning as well as regular maintenance of its electrical and mechanical components. Therefore, a housing of the clipping machine preferably comprises a protective cover (also known as protective hood) which is pivotably attached to the housing and covers the mechanical and electrical components when closed, but provides easy access to these components when opened. Accordingly, such protective cover may be of large dimension and considerable weight, while it is often biased towards a closed position by gravity when pivoted about a horizontal axis. Therefore, the protective cover usually is supported in direction to its opened position by a spring device in order to carry at least a considerable portion of the weight force acting in direction to a closed position, so that a user can more easily open and close the protective cover. Commonly a gas-pressure spring is used to support the protective cover and is arranged to hold the protective cover in place when positioned in its opened position, while the gas-pressure spring merely reduces the force acting in closing direction (i.e. supports only a portion of the weight of the protective cover) so that during a last section of the closing movement the protective cover is moved to its completely closed position by gravity. Preferably, the gas-pressure spring further has a mechanical damping effect or damping function for reducing the closing speed of the cover to avoid slamming.

With such protective covers that are supported by a gas-pressure spring, there is the problem that these covers are subject to varying closing forces depending on the opening angle. However, during a last section of the closing movement, shortly before completely closing, the closing speed and the closing force of the protective cover must not exceed specified values for safety reasons in order to prevent bruising of the fingers of the user, for example. It has proved difficult to adjust the strength of the gas-pressure spring so as to find a good compromise between keeping within the limits of the closing force and speed in the last section of the closing movement and ease of handling throughout the opening and closing movement.

Thus, it is an object of the present invention to provide a packaging machine, and in particular a clipping machine for producing sausage-shaped products, which has a protective cover that can be opened and closed by a user more easily and safely.

According to the present invention, there is provided a clipping machine for producing sausage-shaped products, like sausages, by filling a flowable filling material into a tubular or bag-shaped packaging casing and closing said tubular or bag-shaped packaging casing by at least one closure means, like a closure clip, the clipping machine comprising as components: a filling tube for feeding the filling material into the tubular or bag-shaped packaging casing stored on the filling tube and being closed at its first end, a casing brake assembly for applying a braking force to the tubular or bag-shaped packaging casing while being pulled-off from the filling tube, gathering means for gathering the filled tubular or bag-shaped packaging casing and for forming a plait-like portion thereto, the gathering means including a first displacer unit and a second displacer unit, a clipping device having a first and a second closing tool being reversibly movable between an opened position and a closed position, for applying at least one closure means to the plait-like portion and closing said closure means when the closing tools are in their closed position, and a control unit adapted to control the operation of the clipping machine. The clipping machine further comprises a housing accommodating the components of the clipping machine, the housing having at least one pivotable protective cover for covering and uncovering the components of the clipping machine, wherein the protective cover is arranged to be pivotably moved between a closed position and an opened position, a first spring device, preferably a first gas-pressure spring, arranged to exert a force on the protective cover in direction to the opened position of the protective cover; and a subsection damping device arranged to exert an additional force on the protective cover towards the opened position and to provide a damping effect to the movement of the protective cover, as long as an opening angle of the protective cover is smaller than a threshold angle.

Protective cover PC covers the electrical and mechanical components of clipping machine CM during operation, so that a user cannot touch these components and any risk of injury of the user by electrical shock or by the mechanical components moving with high forces an/or high speed can be avoided. By providing the subsection damping device, both the closing speed and the closing force of the protective cover are suppressed below specified values so that the risk of injury of the user by bruising the fingers, for example, between the edges of protective cover PC and the edges of housing H can be reduced.

According to a further development of the invention, which is independent from the above embodiment, the subsection damping device is an elongated member having a first end portion and a second end portion and being extendable in its longitudinal direction between a maximum extension length corresponding to the opened position of the protective cover and a minimum extension length corresponding to the closed position of the protective cover, and comprises: a second gas-pressure spring, and a linear extension unit extendable and retractable without providing a spring force and operatively arranged in series with the second gas-pressure spring, so that, when compressing the subsection damping device starting from its maximum extension length, firstly the linear extension unit is gradually retracted until it is completely retracted when the opening angle of the protective cover reaches the threshold angle, and subsequently the second gas-pressure spring is compressed. This supporting arrangement provides a simple and reliable mechanism for providing the required additional spring force and the additional damping effect for last section of the closing movement of the protective cover, which reduces costs during fabrication and maintenance of the clipping machine.

In a preferred embodiment, the linear extension unit comprises a guide and a slider configured to be moved along the guide. Preferably, the slider is a piston and the guide is a cylinder having an open end and a closed end. This embodiment is very simple and stable. Alternatively, also other shapes of slider and guide are possible, such as a rail and a slider riding on the rail.

In some embodiments, one of the end portions of the second gas-pressure spring is rigidly coupled to the slider, wherein the other of the end portions of the second gas-pressure spring corresponds to the second end portion of the subsection damping device and is articulated to one of the protective cover and the housing, and the closed end of the cylinder corresponds to the first end portion of the subsection damping device and is articulated to the other of the protective cover and the housing.

Preferably, the slider is configured to slide along the guide without friction. Alternatively, the slider may be configured to provide a friction force while sliding along the guide for damping the opening and closing movements of the protective cover. This friction force can be use to design the subsection damping device with a desired damping profile.

In preferred embodiments, the threshold angle is in the range between 5° and 40°, preferably in the range between 10° and 30°, most preferably the range between 15° and 20°. This enables a sufficiently large section of observation of the specified safety limits (values) of closing speed and closing force on the one hand, and a comfortable and quick handling of the protective cover during most of the opening or closing movement by allowing higher closing speeds and closing forces.

In some embodiments, the first spring device is arranged to exert a force on the protective cover in direction to the closed position as long as an opening angle of the protective cover is smaller than a tipping angle, and exerts a force in the opening direction as long as an opening angle of the protective cover is greater than the tipping angle. In this case, the tipping angle may be smaller than the threshold angle.

The invention further provides a system for producing sausage-shaped products, like sausages, comprising the clipping machine according to one of the preceding embodiments, the system further comprises a hanging line comprising a handling device for suspending the produced sausage-shaped products onto a carrier element, such as a smoking rod, wherein the housing receives the hanging line and the pivotable protective cover is arranged to cover and uncover the handling device.

The invention further provides a subsection damping device for damping the closing movement of a protective cover of a machine, in particular a clipping machine or a hanging line for producing sausage-shaped products, like sausages, wherein the subsection damping device is an elongated member having a first end portion and a second end portion and is extendable in its longitudinal direction between a maximum extension length corresponding to the opened position of the protective cover and a minimum extension length corresponding to the closed position of the protective cover, wherein the subsection damping device comprises:
a gas-pressure spring, and a linear extension unit extendable and retractable without providing a spring force and operatively arranged in series with the gas-pressure spring, so that, when compressing the subsection damping device starting from its maximum extension length, firstly the linear extension unit is gradually retracted until it is completely retracted when the opening angle of the protective cover reaches a threshold angle, and subsequently the second gas-pressure spring is compressed; wherein the subsection damping device is arranged to exert a force on the protective cover towards the opened position and to provide a damping effect to the movement of the protective cover as long as an opening angle of the protective cover is smaller than the threshold angle; and wherein the threshold angle is in the range between 5° and 40°, preferably in the range between 10° and 30°, most preferably the range between 15° and 20°.

Further advantages and preferred embodiments of the present invention will be described in the following together with the drawings listed below. The expressions "left", "right", "below" and "above" used in the following description, are referred to the drawings in an alignment such that the reference numbers and the notation of the figures used can be read in normal orientation.
- Fig. 1: is a schematic view showing the principal design of a clipping machine for producing sausage-shaped products;
- Fig. 2: is a schematic view showing the clipping machine with a housing having a pivotable protective cover according to the invention;
- Fig. 3: is a schematic view showing the supporting arrangement of the protective cover according to the invention;
- Fig. 4(a) to 4(c): are schematic cross-sectional views of a subsection damping device according to the invention in three different extension states;
- Fig. 5: is a schematic view showing a system for producing sausage-shaped products according to the invention.

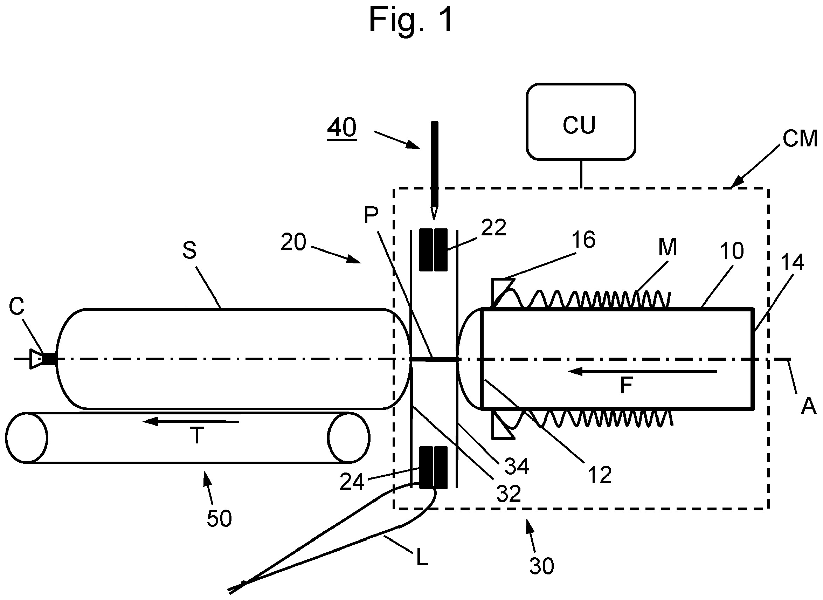

A production machine or clipping machine CM for producing sausage-shaped products S, like sausages, which contain a flowable filling material in a tubular or bag-shaped packaging casing M, is shown schematically in Fig. 1, in particular its closing region. Clipping machine CM comprises a filling tube 10 having a longitudinally and horizontally extending central axis A, with a discharge opening for discharging the filling material at its left end 12 and a feeding opening for feeding the filling material into filling tube 10 in a feeding direction F to the discharge opening of filling tube 10, for example by a feeding pump P of a filler (not shown), at its right end 14. Moreover, a casing brake assembly 16 is arranged on and coaxially with filling tube 10 in the region of left end 12 of filling tube 10. Filling tube 10 is made of a suitable material, like stainless steel.

A supply of tubular packaging casing M made of a thin sheet material is stored on filling tube 10 in a folded manner like a concertina. From the supply of tubular packaging casing M, tubular packaging casing M is pulled-off during the process of producing sausage-shaped products S, in particular by the feeding pressure for filling the filling material into tubular packaging casing M, wherein casing brake assembly 16 provides a braking force for allowing a controlled pulling-off of tubular packaging casing M during the filling process.

Clipping machine CM further comprises a clipping device 20 for closing a filled portion of tubular packaging casing M by applying closure means, like closure clips or closing clips C, to a plait-like portion P, and gathering means 30 for gathering the filled tubular packaging casing M and forming said plait-like portion P thereto. These components are all arranged downstream filling tube 10.

As can be inferred from Fig. 1, clipping device 20 is positioned immediately downstream left end 12 of filling tube 10, and coaxially aligned to filling tube 10. Clipping device 20 comprises a first and a second clipping tool 22, 24 formed by a punch 22 and a die 24. It has to be noted that punch 22 and die 24 may apply and close a single closure clip C for closing just filled tubular packaging casing M, or may apply and close two or more closure clips C at the same time, a first closure clip C for closing the rear end of just filled tubular packaging casing M for forming a sausage-shaped product S, and a second closure clip C for closing the front end of a tubular packaging casing M subsequently to be filled.

Gathering means 30 include a first displacer unit 32 and a second displacer unit 34, wherein first displacer unit 32 is positioned downstream second displacer unit 34. First and second clipping tools 22, 24 of clipping device 20 may be positioned between first and second displacer units 32, 34, at least for applying and closing one or two closure clips C to plait-like portion P. First displacer unit 32 can reversibly be moved parallel to feeding direction F of the filling material.

If it is intended to store sausage-shaped products S on a rod-like element, like a smoking rod, e.g. for further processing like cooking or smoking, a suspension element L, like a suspension loop, may be provided and attached to one end of each of sausage-shaped products S, or at one end of a chain of sausage-shaped products. Suspension element L may be fed to one of closing tools 22, 24, and may be fixed to the respective end of sausage-shaped product S by means of closure clip C that closes said end of sausage-shaped product S.

For separating sausage-shaped product S just produced from the remaining supply of tubular packaging casing M stored on filling tube 10, a cutting device 40 may be provided. Said cutting device 40 cuts the tubular packaging casing M upstream closure clip C that closes the just filled portion of tubular packaging casing M. In case that two closure clips C have been applied to plait-like portion P by clipping device 20, cutting device 40 cuts plait-like portion P between said two closure clips C.

For discharging a sausage-shaped product S just produced from clipping machine CM in a transportation direction T being at least substantially the same as feeding direction F, a discharge device 50 is arranged downstream clipping device 20, which may be a belt conveyor comprising a conveyor belt and guide rollers.

For storing sausage-shaped products S on a rod-like element, suspension element L is caught by a catching device (not shown), like a catching needle, which guides suspension element L towards the rod-like element.

Clipping machine CM further comprises a control unit CU for controlling the operation of clipping machine CM, and one or more drive devices (not shown) for driving the components of clipping machine CM, like e.g. first and second clipping tool 22, 24 of clipping device 20, first and second displacer unit 32, 34 of gathering means 30 and other components or assemblies of clipping machine CM that require a drive unit. The one or more drive units may be coupled to and controlled by control unit CU.

Control unit CU may also control additional components or machines, which are not part of clipping machine CM, but being involved in the production process, or which are provided in combination with clipping machine CM, such as the filler or the hanging line (not shown). In particular, control unit CU may control the drive units of said additional components or machines. The filler may be arranged upstream clipping machine CM, and includes pump for feeding filling material into filling tube 10. Additionally, a metal detector may be provided in the region of filling tube 10, for detecting metal parts in the filling material while fed into tubular packaging casing M, or a label feeding device for feeding labels to clipping device 20 for being attached to the sausage-shaped product S. These and other additional components and machines may be coupled to control unit CU and controlled by control unit CU to be adjusted to each other and to the kind of sausage-shaped product S to be produced by clipping machine CM.

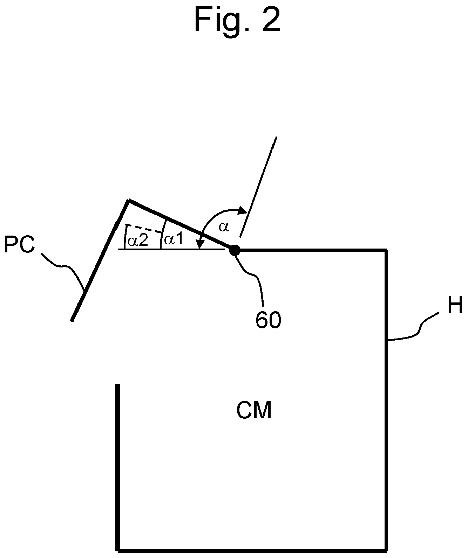

Fig. 2 is a schematic view showing clipping machine CM comprising a housing H, wherein housing H comprises a pivotable protective cover PC according to the invention. Protective cover PC is hinged to housing H at a pivoting axis or hinge 60 and can be pivoted about axis 60 between an opened position and a closed position. Protective cover PC covers the electrical and mechanical components of clipping machine CM during operation, so that a user cannot touch these components and any risk of injury of the user by electrical shock or by the mechanical components moving with high forces an/or high speed can be avoided.

Preferably, axis 60 is oriented horizontally, so that protective cover PC is pivoted from its closed position upwardly against its own weight force into the opened position. Protective cover PC preferably can be pivoted about 90° or more between the closed and opened positions, so that the resulting opening in housing H provides to a user standing adjacent to clip machine CM a large opening directly in front of the user. In this way, the user gets easy access to the components of clipping machine CM inside the housing for maintenance or cleaning, for example. Due to the pivotal movement about axis 60, an effective weight force of protective cover PC in closing direction varies depending on an opening angle α due to the varying horizontal distance of a gravity center of protective cover PC to pivoting axis 60.

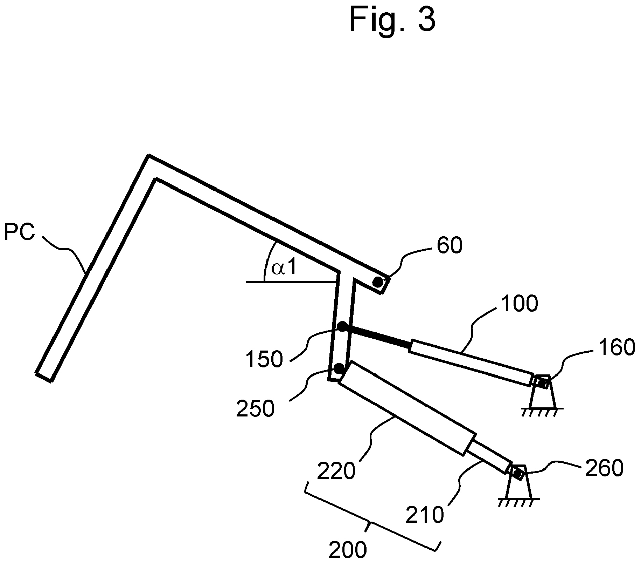

For facilitating the handling, i.e. opening and closing, protective cover PC is supported by a first spring device 100, preferably a gas-pressure spring, as can be seen in Fig. 3, so that a large portion of the weight of protective cover PC is carried by spring device 100 during pivotal movement of the same. First spring device 100 has a first end portion 150 pivotably coupled or articulated to a portion (e.g. a lever or a strut) of protective cover PC and a second end portion 160 articulated to a supporting location of housing H, preferably to a frame portion of housing H. The strength and the articulation points of first spring device 100 can be set such that, for opening angles in a range between 0° and close to a maximum opening angle (which maximum opening angle corresponds to the opened position of protective cover PC), the effective weight force of protective cover PC acting in closing direction is merely partially compensated by the spring force of first spring device 100 acting in the opening direction, so that protective cover PC is moved towards its closed position by gravity. When protective cover PC is positioned close to its opened position, the spring force of spring device 100 preferably is stronger than the effective weight force of protective cover PC, so that protective cover PC is retained in its opened position. Alternatively, it is also possible to set the strength and the articulation points of first spring device 100 such that, for opening angles in a range between 0° and a middle opening angle (such as 40°, or 30° or the like), the effective weight force of protective cover PC acting in closing direction is merely partially compensated by the spring force of first spring device 100 acting in the opening direction, so that protective cover PC is moved towards its closed position by gravity, while it is moved towards the opened position by the spring force of first spring device 100, so that protective cover PC must be moved manually in closing direction over most of the closing movement and is automatically closed by gravity only over the last portion of the closing movement.

When closing protective cover PC, during the last section of the closing movement when the effective weight force of protective cover PC is very strong, there is the risk of injury of the user by bruising the fingers, for example, between the edges of protective cover PC and the edges of housing H along the periphery of the opening of housing H. In order to reduce this risk of injury, both the closing speed and the closing force of protective cover PC must not exceed specified values.

In order to ensure that the specified values of both closing speed and closing force are always observed shortly before completely closing protective cover PC, according to the present invention, a subsection damping device 200 is provided to additionally support or act on protective cover PC during the last section of the closing movement, i.e. for opening angles α smaller than a threshold angle α1, as shown in Figs. 2 and 3. Threshold angle α1 preferably is in the range of 5° to 40°, more preferably in the range between 10° and 30°, most preferably the range between 15° and 20°, in order to ensure a sufficiently large section of observation of the specified safety limits (values) of closing speed and closing force on the one hand, and a comfortable and quick handling of protective cover PC during most of the opening or closing movement by allowing higher closing speeds and closing forces.

Subsection damping device 200 has a first end portion 250 pivotably coupled or articulated to a portion (e.g. a lever) of protective cover PC and a second end portion 160 articulated to a supporting location of housing H, preferably to a frame portion of housing H, similar to first spring device 100. As shown in Fig. 3, first end portion 250 of subsection damping device 200 may be articulated adjacent to first end portion 150 of first spring device 100 at the same portion (e.g. a lever) of protective cover PC, but at a greater distance to pivoting axis 60 to provide a greater leverage. However, the invention is not restricted to this arrangement, and first end portion 150 of first spring device 100 and first end portion 250 of subsection damping device 200 may be articulated to different portions of protective cover PC (e.g. on different levers at opposite ends of pivoting axis 60) with arbitrary distances to pivoting axis 60, depending on the requirements. It is also possible to mount subsection damping device 200 in reversed orientation, i.e. with its first end portion 150 articulated to a supporting location of housing H.

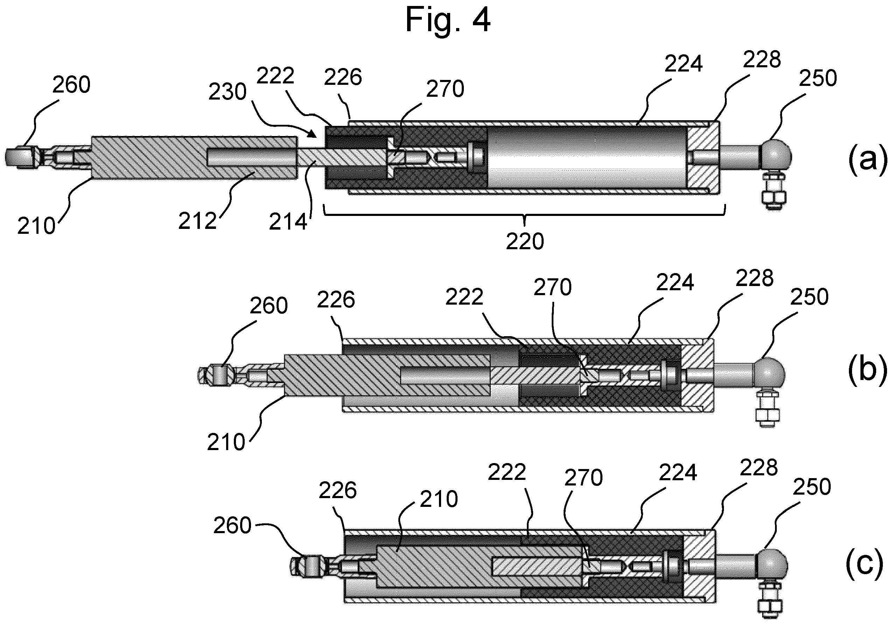

As shown in Fig. 3, and in particular in Figs. 4(a), (b) and (c), subsection damping device 200 is extendable in its longitudinal direction between a maximum extension length shown in Fig. 4(a) and corresponding to the opened position of the protective cover PC, and a minimum extension length shown in Fig. 4(c) and corresponding to the closed position of the protective cover PC. Subsection damping device 200 comprises a second gas-pressure spring 210 and a linear extension unit 220.

Second gas-pressure spring 210 provides the additional spring force acting towards the opened position of protective cover PC and the additional damping effect acting against the moving speed (pivoting speed) of protective cover PC which are required to ensure observation of the specified limits of closing speed and closing force. The damping effect of gas-pressure spring 210 preferably is provided by a fluid-dynamic damping effect that increases with increasing moving speed, in particular with increasing compressing speed, so as to suppress the closing speed below the specified limit value. By providing the additional spring force and the additional damping effect by gas-pressure spring 210 being a dedicated device for this purpose, it can be reliably and easily ensured that closing speed and closing force of protective cover are close to, but below the specified limits. In this way, safety can be ensured while the closing speed and closing force do not decrease too much which would unnecessarily prolongate the closing operation until protective cover PC is completely closed. The damping effect of gas-pressure spring 210 may depend on the moving direction, so that it provides less resistance during the opening movement of protective cover PC which enhances handling.

A stroke length of gas-pressure spring 210, i.e. the difference between its maximum and minimum extension lengths, is set such that gas-pressure spring 210 reaches its maximum extension length when opening angle α is equal to threshold angle α1. When opening angle α of protective cover PC is between threshold angle α1 and the maximum opening angle, gas-pressure spring 210 remains completely extended and does not provide any force or damping effect to protective cover PC, while further extension of subsection damping device 200 is provided by linear extension unit 220 only. It must be noted that gas-pressure spring 210 is merely depicted schematically in Figs. 4(a), 4(b) and 4(c), and comprises a pressure cylinder 212 and a piston (not shown) having a piston rod 214, while the internal construction of gas-pressure spring 210 is not shown in detail. In the depicted embodiment, the left end portion of gas-pressure spring 210 in Fig. 4(a), i.e. the left end portion of pressure cylinder 212, has a coupling device that corresponds to second end portion 260 of subsection damping device 200.

Linear extension unit 220 is configured to be extendable and retractable without providing a spring force or damping effect, and is operatively arranged in series with second gas-pressure spring 210, so that, when compressing subsection damping device 200 starting from its maximum extension length, firstly linear extension unit 220 is gradually retracted until it is completely retracted when the opening angle α of the protective cover PC reaches threshold angle α1, and subsequently second gas-pressure spring 210 is compressed.

Linear extension unit 220 comprises a guide 224 and a slider 222 which is configured to move along guide 224 in longitudinal direction of linear extension unit 220. Guide 224 may be a metallic cylinder 224 and may comprise an open end 226 and a closed end 228 having coupling member that corresponds to first end portion 250 of subsection damping device 200. Slider 222 may be a piston 222 preferably made of plastic. Piston rod 214 of second gas-pressure spring 210 forms one end portion 270 of second gas-pressure spring 210 and is rigidly coupled to piston 222 by a coupling element according to common techniques which are not described in more detail herein. Piston 222 may have a recess 230 which preferably faces second gas-pressure spring 210 and is shaped to receive a portion of pressure cylinder 212 of second gas-pressure spring 210 when gas-pressure spring 210 is completely compressed. It is also possible to mount gas-pressure spring 210 in reversed orientation so that pressure cylinder 212 is coupled to piston 222 (and received in recess 230 if provided) while the outmost end of piston rod 214 of gas-pressure spring 210 has a coupling member that corresponds to second end portion 260 of subsection damping device 200.

Preferably, slider 222 slides along guide 224 substantially without friction, so that it does not provide any resistance to the opening or closing movement of protective cover PC. In case of a piston 222 and a cylinder 224, preferably a venting hole is provided at the closed end of the cylinder or in the piston, so that the air in cylinder 224 is not compressed. Alternatively, slider 222 slide along guide while generating a friction force acting against the pivotal movement of protective cover PC. This friction force can be use to design the subsection damping device 200 with a desired comfortable damping profile which is a combination of damping effect of the first and/or second gas-pressure spring devices 100, 210, which may possible depend on the moving direction (opening or closing) and a substantially constant damping force of slider 222 independent from the moving direction.

When compressing or retracting subsection damping device 200 starting from its maximum extension length shown in Fig. 4(a), firstly slider 222 slides along cylinder 224 towards closed end 228 of cylinder 224, preferably without providing considerable resistance to the movement of protective cover PC. In this phase of closing movement of protective cover PC, only first spring device 100 provides a force and optionally a damping effect. The supporting arrangement for protective cover PC is configured such that piston 22 arrives at and abuts to closed end 228 when opening angle α reaches threshold angle α1, and linear extension unit 220 is thus completely retracted, as shown in Fig. 4(b). When further closing protective cover PC, linear extension unit 220 remains fully contracted, while second gas-pressure spring 210 begins to retract (i.e. is compressed) and provides the additional spring force and the additional damping effect while piston rod 214 is moved into pressure cylinder 212. It must be noted that it is also possible to design linear extension unit 220 so as to provide a considerable spring force during extension and retraction, for example by comprising a further spring device such as a gas-pressure spring operatively connected in series with second gas-pressure spring 210. In this way, first spring device 100 can be designed to have a lower spring force, or can be omitted.

Since the stroke length of linear extension unit 220 is longer than the stroke length of second gas-pressure spring 210, the additional spring force and the additional damping effect are provided by subsection damping device 200 only during a relatively short subsection of the closing movement of the protective cover PC. By adjusting the relationship between the stroke length of linear extension unit 220 and the stroke length of second gas-pressure spring 210, the subsection of effective additional spring force and additional damping can be adjusted to a desired range opening angle α.

According to a further embodiment, first spring device 100 is arranged such that it acts in the opening direction between the maximum opening angle of protective cover PC and a tipping angle α2, but acts in closing direction between tipping angle α2 and an opening angle of zero (0°). This can be achieved by arranging the articulation points of first spring device 100 such that at tipping angle α2, the articulation point of first spring device 100 on protective cover PC (which corresponds to first end portion 150 of first spring device 100 shown in Fig. 3) is in its dead center. In other words, at tipping angle α2, first spring device 100 reaches its minimum extension length and begins to expand again when further closing protective cover PC. This configuration is particularly advantageous if protective cover PC is arranged such that its gravity force declines shortly before complete closing, or if protective cover is pivoted about a vertical axis, for example, so that protective cover PC cannot be held in the closed position by its own gravity force. In this embodiment, the strength of first spring device 100 can be set such that during a closing movement beginning from the opened position of protective cover PC, a user firstly pulls or pushes protective cover PC towards its closed position until tipping angle α2, and subsequently protective cover PC is closed automatically when the force acting in closing direction (which may be a combination of the force exerted by first spring device 100 and the gravity force of protective cover PC) exceeds the force exerted by subsection damping device 200 in the opening direction. In this connection, tipping angle α2 can be equal to or smaller than first threshold angle α1, as shown in Fig. 2. Thus, shortly before automatic closing of protective cover PC begins, the user is required to exert an increased force in closing direction, which further reduces the risk of bruising fingers, for example. Alternatively, tipping angle α2 may be greater than first threshold angle α1, so that the closing operation of protective cover PC is more comfortable due to a larger section of an automatic closing movement.

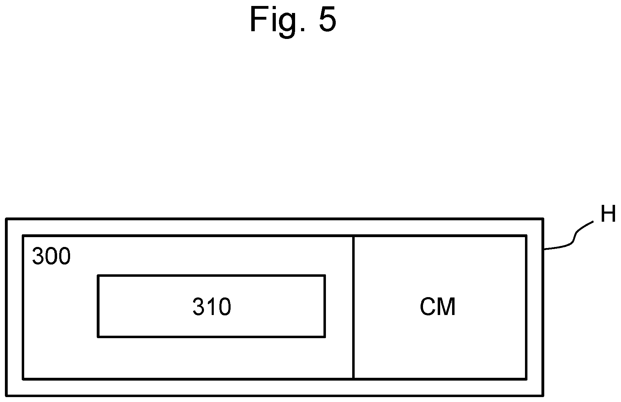

As shown in Fig. 5, a system for producing sausage-shaped products S, like sausages, according to the invention comprises the clipping machine CM and e.g. a hanging line 300 which comprises a handling device 310 for suspending the produced sausage-shaped products S onto a carrier element, such as a smoking rod (not shown). Hanging line 300 may be received within housing H of clipping machine CM, as shown in Fig. 5, or may be coupled to clipping machine CM such that a housing of hanging line 300 and housing H of clipping machine CM can be considered to form a combined housing H. Housing H receives hanging line 300, wherein pivotable protective cover PC is arranged to cover and uncover handling device 310.

### Reference signs

- 10: filling tube
- 12: left end of the filling tube
- 14: right end of the filling tube
- 16: casing brake assembly
- 20: clipping device
- 22: first clipping tool
- 24: second clipping tool
- 30: gathering means
- 32: first displacer unit
- 34: second displacer unit
- 40: cutting device
- 50: discharge device
- 60: pivoting axis of protective cover
- 100: first spring device (gas-pressure spring)
- 150: first end portion of first spring device
- 160: second end portion of first spring device
- 200: subsection damping device
- 210: second gas-pressure spring
- 212: pressure cylinder
- 214: piston rod of second gas-pressure spring
- 220: linear extension unit
- 222: slider
- 224: guide
- 226: open end
- 228: closed end
- 230: recess
- 250: first end portion of subsection damping device
- 260: second end portion of subsection damping device
- 270: end portion of piston rod of second gas-pressure spring
- 300: hanging line
- 310: handling device
- α: opening angle of protective cover
- α1: threshold angle
- α2: tipping angle
- A: central axis of the filling tube
- C: closure clip
- F: feeding direction
- H: housing of clip machine
- L: suspension element
- M: tubular packaging casing
- P: plait-like portion
- PC: protective cover
- S: sausage-shaped product
- T: transportation direction
- CM: clipping machine
- CU: control unit

## Claims

1. A clipping machine (CM) for producing sausage-shaped products (S), like sausages, by filling a flowable filling material into a tubular or bag-shaped packaging casing (M) and closing said tubular or bag-shaped packaging casing (TM) by at least one closure means (C), like a closure clip, the clipping machine (CM) comprising as components:
a filling tube (10) for feeding the filling material into the tubular or bag-shaped packaging casing (M) stored on the filling tube (10) and being closed at its first end,
a casing brake assembly (16) for applying a braking force to the tubular or bag-shaped packaging casing (M) while being pulled-off from the filling tube (10),
gathering means (30) for gathering the filled tubular or bag-shaped packaging casing (M) and for forming a plait-like portion (P) thereto, the gathering means (30) including a first displacer unit (32) and a second displacer unit (34),
a clipping device (20) having a first and a second closing tool (22, 24) being reversibly movable between an opened position and a closed position, for applying at least one closure means (C) to the plait-like portion (P) and closing said closure means (C) when the closing tools (22, 24) are in their closed position, and
a control unit (CU) adapted to control the operation of the clipping machine (CM);
wherein the clipping machine (CM) further comprises:
a housing (H) accommodating the components of the clipping machine (CM), the housing (H) having at least one pivotable protective cover (PC) for covering and uncovering the components of the clipping machine (CM), wherein the protective cover (PC) is arranged to be pivotably moved between a closed position and an opened position,
a first spring device (100), preferably a first gas-pressure spring, arranged to exert a force on the protective cover (PC) in direction to the opened position of the protective cover (PC); and
a subsection damping device (200) arranged to exert an additional force on the protective cover (PC) towards the opened position and to provide a damping effect to the movement of the protective cover (PC), as long as an opening angle (α) of the protective cover (PC) is smaller than a threshold angle (α1).

2. The clipping machine (CM) according to claim 1,
wherein the subsection damping device (200) is an elongated member having a first end portion (250) and a second end portion (260) and being extendable in its longitudinal direction between a maximum extension length corresponding to the opened position of the protective cover (PC) and a minimum extension length corresponding to the closed position of the protective cover (PC), and comprises:
a second gas-pressure spring (210), and
a linear extension unit (220) extendable and retractable without providing a spring force and operatively arranged in series with the second gas-pressure spring (210), so that, when compressing the subsection damping device (200) starting from its maximum extension length, firstly the linear extension unit (220) is gradually retracted until it is completely retracted when the opening angle (α) of the protective cover (PC) reaches the threshold angle (α1), and subsequently the second gas-pressure spring (210) is compressed.

3. The clipping machine (CM) according to claim 2,
wherein the linear extension unit (220) comprises a guide (224) and a slider (222) configured to be moved along the guide (224).

4. The clipping machine (CM) according to claim 3,
wherein the slider (222) is a piston and the guide (224) is a cylinder having an open end (226) and a closed end (228).

5. The clipping machine (CM) according to claim 3 or 4,
wherein one of the end portions (270) of the second gas-pressure spring (210) is rigidly coupled to the slider (222), and
wherein the other of the end portions (260) of the second gas-pressure spring (210) corresponds to the second end portion (260) of the subsection damping device (200) and is articulated to one of the protective cover (PC) and the housing (H), and the closed end (228) of the cylinder (224) corresponds to the first end portion (250) of the subsection damping device (200) and is articulated to the other of the protective cover (PC) and the housing (H).

6. The clipping machine (CM) according to one of claims 3 to 5,
wherein the slider (222) is configured to slide along the guide (224) without friction.

7. The clipping machine (CM) according to one of claims 3 to 5,
wherein the slider (222) is configured to provide a friction force while sliding along the guide (224) for damping the opening and closing movements of the protective cover (PC).

8. The clipping machine (CM) according to one of the preceding claims,
wherein the threshold angle (α1) is in the range between 5° and 40°, preferably in the range between 10° and 30°, most preferably the range between 15° and 20°.

9. The clipping machine (CM) according to one of the preceding claims,
wherein the first spring device (100) is arranged to exert a force on the protective cover (PC) in direction to the closed position as long as an opening angle (α) of the protective cover (PC) is smaller than a tipping angle (α2), and exerts a force in the opening direction as long as an opening angle (α) of the protective cover (PC) is greater than the tipping angle (α2).

10. The clipping machine (CM) according to claim 9,
wherein the tipping angle (α2) is smaller than the threshold angle (α1).

11. A system for producing sausage-shaped products (S), like sausages, comprising the clipping machine (CM) according to one of the preceding claims, the system further comprises:
a hanging line (300) comprising a handling device (310) for suspending the produced sausage-shaped products (S) onto a carrier element, such as a smoking rod,
wherein the housing (H) receives the hanging line (300) and the pivotable protective cover (PC) is arranged to cover and uncover the handling device (310).

12. A subsection damping device (200) for damping the closing movement of a protective cover (PC) of a machine, in particular a clipping machine (CM) or a hanging line (H) for producing sausage-shaped products (S), like sausages,
wherein the subsection damping device (200) is an elongated member having a first end portion (250) and a second end portion (260) and is extendable in its longitudinal direction between a maximum extension length corresponding to the opened position of the protective cover (PC) and a minimum extension length corresponding to the closed position of the protective cover (PC),
wherein the subsection damping device (200) comprises:
a gas-pressure spring (210), and
a linear extension unit (220) extendable and retractable without providing a spring force and operatively arranged in series with the gas-pressure spring (210), so that, when compressing the subsection damping device (200) starting from its maximum extension length, firstly the linear extension unit (220) is gradually retracted until it is completely retracted when the opening angle (α) of the protective cover (PC) reaches a threshold angle (α1), and subsequently the second gas-pressure spring (210) is compressed;
wherein the subsection damping device is arranged to exert a force on the protective cover (PC) towards the opened position and to provide a damping effect to the movement of the protective cover (PC) as long as an opening angle (α) of the protective cover (PC) is smaller than the threshold angle (α1);
and wherein the threshold angle (α1) is in the range between 5° and 40°, preferably in the range between 10° and 30°, most preferably the range between 15° and 20°.
